# EUROPÄISCHE PATENTSCHRIFT

(11) **EP 0 734 539 B1**
(45) Veröffentlichungstag und Bekanntmachung des Hinweises auf die Patenterteilung: **13.11.2002**
(21) Anmeldenummer: 95926395.5
(22) Anmeldetag: 06.07.1995
(51) Int. Cl.: G02B 21/16, G02B 6/42

(54) **VORRICHTUNG ZUM EINKOPPELN DES LICHTSTRAHLS EINES UV-LASERS IN EIN LASER-SCANMIKROSKOP**
DEVICE FOR FEEDING THE LIGHT BEAM FROM A UV LASER INTO A LASER SCANNING MICROSCOPE
DISPOSITIF SERVANT A INJECTER LE FAISCEAU LUMINEUX D'UN LASER U.V. DANS UN MICROSCOPE A BALAYAGE LASER

(30) Priorität: 25.08.1994 DE 4430012; 08.09.1994 DE 4431912; 23.12.1994 DE 4446185
(43) Veröffentlichungstag der Anmeldung: 02.10.1996
(73) Patentinhaber: Leica Microsystems Heidelberg GmbH, 69120 Heidelberg (DE)
(72) Erfinder: ENGELHARDT, Johann, D-76669 Bad Schönborn (DE); ULRICH, Heinrich, D-69121 Heidelberg (DE); KIERSCHKE, Klaus, D-69198 Schriesheim (DE)
(74) Vertreter: Naumann, Ulrich, Dr.-Ing.
(86) Internationale Anmeldenummer: EP9502627
(87) Internationale Veröffentlichungsnummer: WO96006377

(56) Entgegenhaltungen:
- EP-A- 0 176 358
- WO-A-90/01716
- WO-A-91/15792
- DE-A- 3 339 370
- DE-A- 3 915 692
- DE-A- 4 323 129
- DE-U- 9 110 926
- DE-U- 9 110 927
- US-A- 4 500 204
- US-A- 4 626 679
- US-A- 5 161 053
- US-A- 5 233 197
- : "Meyers Lexikon der Technik und der exakten Naturwissenschaften", 1970, BIBLIOGRAPHISCHES INSTITUT , MANNHEIM/WIEN/ZüRICH
- "Spatial Distibution of protein in interstitial matrix of rat mesenteric tissue", BJ Barber and BD Nearing, Dep. of Physiology, Meical College of Wisconsin, Milwaukee 53226 (1990 the American Physiological Society, pp. H 556- H 564)

## Beschreibung

Die Erfindung betrifft eine Vorrichtung zum Einkoppeln des Lichtstrahls eines UV-Lasers in ein Laser-Scanmikroskop mit einer Justiereinrichtung zum Ausrichten des Lichtstrahls auf den Strahlengang des Laser-Scanmikroskops und mit einem zwischen dem UV-Laser und der Justiereinrichtung angeordneten flexiblen Lichtleitfaserelement.

Aus dem Stand der Technik sind prinzipiell zwei unterschiedliche Möglichkeiten zum Einkoppeln des Lichtstrahls eines Lasers in ein Laser-Scanmikroskop bekannt. Beispielhaft sei hier auf die Offenlegungsschrift der internationalen Patentanmeldung WO 92/18850 und auf die Offenlegungsschrift der europäischen Patentanmeldung 0 592 089 hingewiesen. In beiden Druckschriften wird eine direkte Einkopplung des UV-Laser-Lichts über eine mechanisch starre Anordnung von optischen Bausteinen, wie Linsen, Filter, Lochbienden, etc. beschrieben. Infolge dieser Art der Einkopplung entstehen sehr große optisch-mechanisch zusammenhängende Systeme mit notwendigerweise langen Strahlengängen. Lange Strahlengänge wiederum führen zu Justierinstabilitäten des Systems. Ein großes Problem bei der Justierung solcher Systeme stellen die durch die Kühlung bedingten Vibrationen des Lasers dar. Bei einer optischmechanischen Direkteinkopplung des Laser-Lichtstrahls in das Scanmikroskop werden die Vibrationen der Laserkühlung oftmals auf das Mikroskop übertragen, so daß Bildstörungen entstehen und eine dauerhafte Justierung erheblich erschwert wird.

Alternativ zu einer Direkteinkopplung besteht die Möglichkeit der faseroptischen Lichteinkopplung, wie sie bspw. in der US-Schrift 5 161 053 u.a. auch für die Einkopplung von UV-Laserlicht beschrieben wird. Das Laserlicht wird über ein flexibles Lichtleitfaserelement in den Strahlengang des Mikroskops geleitet. Auf diese Weise läßt sich der Laser von dem Mikroskop quasi mechanisch entkoppeln, so daß die kühlungsbedingten Vibrationen des Lasers nicht auf das Mikroskop übertragen werden, sondern von dem flexiblen Lichtleitfaserelement abgefangen werden. Außerdem können dadurch die Strahllängen des Systems erheblich verkürzt werden. Es sind bereits Lichtleitfasern für UV-Laserlicht auf dem Markt. Tests haben jedoch gezeigt, daß deren Transparenz bei Bestrahlung mit mehr als 10 mW bereits nach wenigen Stunden irreversibel auf weniger als 10% der ursprünglichen Transparenz zurückgeht. Zurückzuführen ist dies vermutlich auf chemische bzw. photochemische Reaktionen zwischen der eigentlichen lichtleitenden Faser und deren Beschichtung, der sog. Coating. Aus diesem Grunde werden bislang UV-Laser in der Regel direkt in das Mikroskop eingekoppelt.

Die WO 91/15792 offenbart ein Konfokal-Mikroskop, bei dem über eine Lichtleitfaser das Licht von einem Laser in den optischen Strahlengang eingekoppelt wird. Zwischen dem Laser und der Einkopplung des Lichts in die Lichtleitfaser ist eine Blende oder ein Stahlunterbrecher angeordnet. Die Aufgabe des Strahlunterbrechers ist es, in geeigneter Weise den Laserstrahl zu unterbrechen, damit Scanfehler aufgrund der schnellen Bewegung der Scanspiegel vermieden werden. Die Verwendung von UV ist nicht erwähnt.

Das deutsche Gebrauchsmuster G 91 10 927.2 offenbart eine Glasfaser-Beleuchtungseinrichtung für ein Mikroskop. Hierzu sind die Lichtquelle und der Filterwechsler in einer räumlich vom Mikroskop getrennten Einheit angeordnet. Die Beleuchtungseinrichtung enthält unter anderem einen Filterwechsler und einen Lichtverschluß.

Der Erfindung liegt nun die Aufgabe zugrunde, eine Vorrichtung zum Einkoppeln des Lichtstrahls eines UV-Lasers in ein Laser-Scanmikroskop der in Rede stehenden Art anzugeben, mit der eine Übertragung der Vibration des Lasers auf das Mikroskop weitestgehend verhindert wird und die auch langfristig eingesetzt werden kann, um den durch Wechseln der Einkopplungsvorrichtung bedingten Aufwand so gering wie möglich zu halten.

Die erfindungsgemäße Vorrichtung zum Einkoppeln des Lichtstrahls eines UV-Lasers in ein Laser-Scanmikroskop löst die voranstehende Aufgabe durch die Merkmale des Patentanspruchs 1. Danach ist die eingangs genannte Vorrichtung derart ausgebildet, daß zwischen dem UV-Laser und dem Lichtleitfaserelement ein Scanshutter angeordnet ist, über den das Lichtleitfaserelement nur während des Scannens, also zur Aufnahme von Bildern, für den Lichtstrahl des UV-Lasers freigebbar ist.

Erfindungsgemäß ist zunächst erkannt worden, daß zur Minimierung des Justieraufwands die mechanische Entkopplung des Lasers vom Mikroskop erforderlich ist. Es ist ferner erkannt worden, daß Lichtleitfaserelemente, die sich für Licht anderer Wellenlängen bewährt haben, auch in Verbindung mit UV-Laserlicht das Mittel der Wahl sind. Davon ausgehend ist erkannt worden, daß die Verschlechterung der Transparenz einer Lichtleitfaser zum einen von der Bestrahlungsleistung und zum anderen von der Bestrahlungsdauer abhängt, so daß die Lebensdauer einer Lichtleitfaser bzw. deren Brauchbarkeit zum Einkoppeln des UV-Laserlichts erheblich verlängert werden kann, wenn eine Bestrahlung der Lichtleitfaser nur während des Scannens, also zur Aufnahme von Bildern, erfolgt. Es ist nämlich auch erkannt worden, daß eine Bestrahlung des Lichtleitfaserelements mit UV-Laserlicht bspw. während des Anlaufens des Lasers oder der Objekteinrichtung vor dem eigentlichen Abbilden bzw. anderen Experimentvorbereitungszeiten oder zum Justieren der gesamten optischen Anordnung nicht erforderlich ist. Es ist schließlich erkannt worden, daß eine Bestrahlung des Lichtleitfaserelements auf einfache und vorteilhafte Weise mit Hilfe eines zwischen dem UV-Laser und dem Lichtleitfaserelement angeordneten Scanshutters abgestellt werden kann, der das Lichtleitfaserelement nur während des Scannens freigibt.

Der Scanshutter ist durch elektro- und/oder magneto-optische Modulationsmittel gebildet sein, durch die der Lichtstrahl des UV-Lasers abgelenkt wird. Als derartige optische Schalter können bspw. Modulationsmittel in Form von schnellen Flüssigkristallen oder anderen optisch aktiven Komponenten eingesetzt werden, die computergesteuert geschaltet werden können und so ebenfalls zeitlich mit dem Scannen koodiniert werden können.

In einer vorteilhaften Ausgestaltung kann die erfindungsgemäße Vorrichtung einen oder mehrere Filter umfassen, die zwischen dem UV-Laser und dem Scanshutter oder zwischen dem Scanshutter und dem Lichtleitfaserelement angeordnet sind. Derartige Filteranordnungen werden zum Ausblenden von bestimmten Wellenlängenbereichen des Laserlichts eingesetzt. Die Notwendigkeit zur Verwendung von Filteranordnungen ergibt sich in der Regel aus der Art der durchzuführenden Messungen und Meßobjekte. Wesentlich ist, daß bei der beanspruchten Anordnung der Filter im Strahlengang vor dem Lichtleitfaserelement auch die Filter vom Mikroskop mechanisch entkoppelt sind. Dies ist insbesondere bei Verwendung eines Filterrades vorteilhaft, das mehrere Filter umfaßt, welche durch mechanische Bewegung, nämlich Drehung des Rades, im Strahlengang positioniert werden. Die Drehung des Filterrades ist genauso wie die Kühlung des UV-Lasers mit Vibrationen verbunden, die möglichst nicht auf das Mikroskop übertragen werden sollten.

Als besonders vorteilhaft hat sich die Verwendung eines Single-Mode-Lichtleitfaserelements erwiesen, da sich dann das Licht im Laser-Scanmikroskop besonders gut fokusieren läßt. Zur besseren Energieübertragung vom UV-Laser zum Laser-Scanmikroskop sind in einer vorteilhaften Ausgestaltung der erfindungsgemäßen Vorrichtung an einem Ende des Lichtleitfaserelements ein Lichteinkoppler und entsprechend am anderen Ende des Lichtleitfasesrelements ein Lichtauskoppler angeordnet.

Ein besonderer Vorteil der erfindungsgemäßen Vorrichtung besteht darin, daß der UV-Lasersstrahl nur dann in die Lichtleitfaser gespeist wird, wenn er zur Bildaufnahme tatsächlich benötigt wird. Ein weiterer Vorteil besteht darin, daß eine Justierung des UV-Laserlichtstrahls auf den Strahlengang des Laser-Scanmikroskops auch mit sichtbarem Licht vorgenommen werden kann. D.h., daß der UV-Laser zum Justieren nicht eingeschaltet sein muß, zumindest jedoch eine Bestrahlung des Lichtleitfaserelements mit UV-Laserlicht zum Justieren nicht erforderlich ist. In einer vorteilhaften Ausgestaltung der erfindungsgemäßen Vorrichtung ist zur Justierung mit sichtbarem Licht ein optischer Baustein zwischen dem Lichtleitfaserelement und der eigentlichen Justiereinrichtung angeordnet, über den das aus dem Lichtleitfaserelement austretende sichtbare Licht mit definiertem Strahlengang auf die Justiereinrichtung geführt wird. In der Regel wird der optische Baustein zur Parallelisierung des aus dem Lichtleitfaserelement austretenden sichtbaren Lichts dienen. Es kann sich dabei in vorteilhafter Weise um eine Lochblenden-Optik mit einer Linse oder einem Linsensystem, einer sog. Pinhole-Optik, handeln. Möglich wäre auch der Einsatz einer Teleoptik zur Verkürzung des Strahlengangs. Der optische Baustein dient lediglich zur Justierung mit sichtbarem Licht. Beim eigentlichen Scannen mit UV-Laserlicht spielt dieser optische Baustein keine Rolle. Er könnte daher nach dem Justieren aus dem Strahlengang der Meßanordnung entfernt werden, bspw. durch Herausschwenken.

Auch die Justiereinrichtung kann auf unterschiedlichste Weise realisiert sein. Sie wird jedoch regelmäßig ein Ablenkungselement umfassen, wozu bspw. eine einstellbare Linse oder auch ein dichroitischer Strahlteiler oder Strahlvereiniger - je nach Meßanordnung - dienen kann.

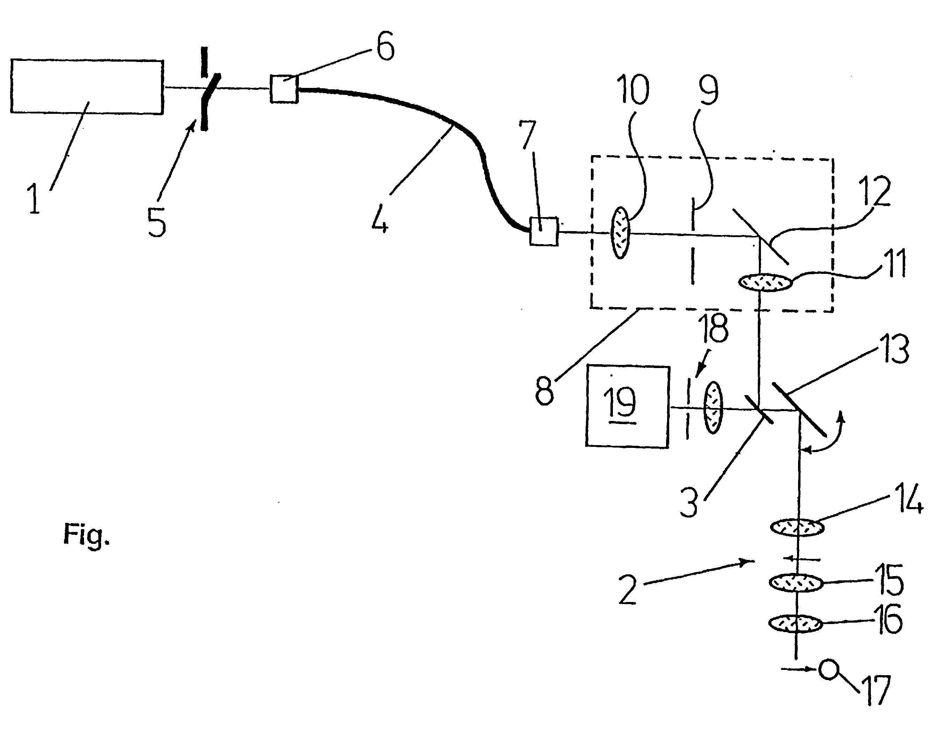

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erläutert.

Die einzige Figur zeigt in schematischer Darstellung einen möglichen Aufbau der erfindungsgemäßen Vorrichtung zum Einkoppeln des Lichtstrahls eines UV-Lasers in ein Laser-Scanmikroskop.

Die in der einzigen Figur dargestellte Vorrichtung dient zum Einkoppeln des Lichtstrahls eines UV-Lasers 1 in ein Laser-Scanmikroskop 2. Das Laser-Scanmikroskop 2 ist hier lediglich andeutungsweise durch einen sog. Scanspiegel 13 und ein Okular 14 dargestellt. Die Vorrichtung umfaßt eine Justiereinrichtung 3 zum Ausrichten des Laser-Lichtstrahls auf den Strahlengang des Laser-Scanmikroskops 2. Außerdem ist zwischen dem UV-Laser 1 und der Justiereinrichtung 3 ein flexibles Lichtleitfaserelement 4 angeordnet. Aufgrund der Flexibilität des Lichtleitfaserelements 4 wird der Laser 1 quasi mechanisch vom Laser-Scanmikroskop 2 entkoppelt, so daß bspw. kühlungsbedingte Vibrationen des Lasers 1 nicht auf das Laser-Scanmikroskop 2 übertragen werden.

Erfindungsgemäß ist zwischen dem UV-Laser 1 und dem Lichtleitfaserelement 4 ein sog. Scanshutter 5 angeordnet, über den das Lichtleitfaserelement 4 nur während des Scannens, also zur Aufnahme von Bildern, für den Lichtstrahl des UV-Lasers 1 freigebbar ist.

Im hier dargestellten Ausführungsbeispiel ist der Scanshutter 5 wie im Stand der Technik in Form einer mechanischen Blende dargestellt, die den Laser-Lichtstrahl einfach vor dem Lichtleitfaserelement 4 ausblendet. Diese Blende 5 wird automatisch, synchronisiert mit dem Scannen betätigt. Bei geöffnetem Scanshutter 5 fällt der Laserlichtstrahl auf einen am Ende des Lichtleitfaserelements 4 angeordneten Lichteinkoppler 6. Entsprechend ist am anderen Ende des Lichtleitfaserelements 4 ein Lichtauskoppler 7 angeordnet. Das Lichtleitfaserelement 4 in dem dargestellten Ausführungsbeispiel ist eine Single-Mode-Lichtleitfaser.

Zwischen dem Lichtleitfaserelement 4 bzw. dem Lichtauskoppler 7 und der Justiereinrichtung 3 ist ein optischer Baustein 8 angeordnet, der zur Justierung des aus dem Lichtleitfaserelement 4 austretenden Laser-Lichtstrahls dient. Die Justierung erfolgt allerdings nicht mit dem Laser-Lichtstrahl selbst, sondern bei - mit Hilfe des Scanshutters 5 - ausgeblendetem Laser-Lichtstrahl mit Hilfe von sichtbarem Licht, das aus dem Lichtleitfaserelement 4 austritt. Der optische Baustein 8 dient dazu, dieses sichtbare Licht zu parallelisieren. Dazu umfaßt der optische Baustein 8 eine Lochblendenoptik mit einer Lochblende 9 und zwei Linsen 10 und 11, die jeweils im Strahlengang vor und hinter der Lochblende 9 angeordnet sind. Im hier dargestellten Ausführungsbeispiel ist ferner ein Umlenkspiegel 12 vorgesehen, der sich jedoch nicht auf die Funktion der Lochblendenoptik auswirkt. Mit Hilfe der Lochblendenoptik wird der Strahlengang des aus dem Lichtleitfaserelement 4 austretenden sichtbaren Lichts entsprechend dem zu erwartenden Strahlengang des Laser-Lichtstrahls ausgerichtet. Auf diese Weise ist eine Justierung der Gesamtanordnung für das UV-Laserlicht unter Zuhilfenahme von sichtbarem Licht möglich.

Als Justiereinrichtung 3 dient in dem hier dargestellten Ausführungsbeispiel ein dichroitischer Strahlteiler bzw. Strahlvereiniger. Der Laserstrahl wird über den Scanspiegel 13, durch das Okular 14, durch die Tubuslinse 15 und das Objektiv 16 auf das Objekt 17 gelenkt. Der vom Objekt 17 zurücklaufende Licht-strahl wird in zwei Teilstrahlen mit unterschiedlicher Wellen-länge aufgeteilt. Diese Teilstrahlen werden in unterschiedliche Richtung gelenkt.

Der nicht abgelenkte Teil des vom Objekt 17 kommenden Licht-strahls (Fluoreszenzlicht oder Reflexionslicht) wird über eine Pinhole-Optik 18 dem konfokalen Detektor 19 zugeführt.

Hinsichtlich weiterer vorteilhafter Ausgestaltungen der erfindungsgemäßen Vorrichtung zum Einkoppeln des Lichtstrahls eines UV-Lasers in ein Laser-Scanmikroskop, die in der einzigen Figur nicht dargestellt sind, wird auf den allgemeinen Teil der Beschreibung verwiesen.

Abschließend sei noch darauf hingewiesen, daß die erfindungsgemäße Lehre nicht auf das voranstehend erörterte Ausführungsbeispiel beschränkt ist. Die erfindungsgemäße Lehre läßt sich vielmehr auch bei Verwendung von konstruktiv andersartigen Scanshuttern und einer anderen optischen Anordnung für das Justieren mit sichtbarem Licht realisieren.

### Bezugszeichenliste

- 1: UV-Laser
- 2: Laser-Scanmikroskop
- 3: Justiereinrichtung
- 4: Lichtleitfaserelement
- 5: Scanshutter
- 6: Lichteinkoppler
- 7: Lichtauskoppler
- 8: optischer Baustein
- 9: Lochblende
- 10: Linse
- 11: Linse
- 12: Umlenkspiegel
- 13: Scanspiegel
- 14: Okular
- 15: Tubuslinse
- 16: Objektiv
- 17: Objekt
- 18: Pinhole-Obptik
- 19: konfokaler Detektor

## Patentansprüche

1. System; das einen Laser, ein konfokales Laser-Scanmikroskop, ein flexibles Lichtleitfaserelement (4) und eine Vorrichtung zum Einkoppeln des Lichtstrahls des Lasers (1) in das konfokale Laser-Scanmikroskop (2) umfasst, wobei zwischen dem Laser (1) und dem Lichtleitfaserelement (4) ein Scanshutter (5) angeordnet ist, über den das Lichtleitfaserelement (4) nur während des Scannens, also zur Aufnahme von Bildern, für den Lichtstrahl des Lasers (1) freigebbar ist, Mittel zur automatischen Synchronisierung von Scanshutter und Scanvorgang vorgesehen sind, der Scanshutter (5) durch elektro- und/oder magneto-optische Modulationsmittel gebildet ist, durch die der Lichtstrahl des UV-Lasers (1) ablenkbar ist,
der Laser ein UV-Laser ist, das Lichtleitfaserelement (4) eine Single Mode Lichtleitfaser ist, das flexible Lichtleitfaserelement (4) zwischen dem UV-Laser (1) und einer Justiereinrichtung (3) angeordnet ist und mit der Justiereinrichtung (3) der Lichtstrahl des UV-Lasers auf den Strahlengang des konfokalen Laser-Scanmikroskops (2) ausrichtbar ist.

2. System nach Anspruch 1, **dadurch gekennzeichnet, daß** zwischen dem UV-Laser und dem Scanshutter oder zwischen dem Scanshutter und dem Lichtleitfaserelement mindestens ein Filter angeordnet ist.

3. System nach einem der Ansprüche 1 bis 2, **dadurch gekennzeichnet, daß** zwischen dem UV-Laser und dem Scanshutter oder zwischen dem Scanshutter und dem Lichtleitfaserelement mehrere austauschbare Filter, vorzugsweise ein Filterrad, zum Auswählen von bestimmten Wellenlängenbereichen angeordnet sind.

4. System nach einem der Ansprüche 1 bis 3, **dadurch gekennzeichnet, daß** an einem Ende des Lichtleitfaserelements (4) ein Lichteinkoppler (6) und entsprechend am anderen Ende des Lichtleitfaserelements (4) ein Lichtauskoppler (7) angeordnet sind.

5. System nach einem der Ansprüche 1 bis 4, **dadurch gekennzeichnet, daß** zwischen dem Lichtleitfaserelement (4) und der Justiereinrichtung (3) mindestens ein optischer Baustein (8) angeordnet ist, über den sichtbares Licht mit definiertem Strahlengang aus dem Lichtleitfaserelement (4) auf die Justiereinrichtung (3) führbar ist.

6. System nach Anspruch 5, **dadurch gekennzeichnet, daß** der optische Baustein (8) das aus dem Lichtleitfaserelement (4) austretende sichtbare Licht parallelisiert.

7. System nach einem der Ansprüche 5 oder 6, **dadurch gekennzeichnet, daß** der optische Baustein (8) eine Lochblenden-Optik mit einer Linse (10, 11) oder einem Linsensystem umfaßt.

8. System nach einem der Ansprüche 5 bis 7, **dadurch gekennzeichnet, daß** der optische Baustein (8) nach dem Ausrichten des aus dem Lichtleitfaserelement (4) austretenden sichtbaren Lichts auf den Strahlengang des Laser-Scanmikroskops (2) entfernbar ist.

9. System nach einem der Ansprüche 1 bis 8, **dadurch gekennzeichnet, daß** die Justiereinrichtung mindestens eine einstellbare Linse umfaßt.

10. System nach einem der Ansprüche 1 bis 9, **dadurch gekennzeichnet, daß** die Justiereinrichtung (3) mindestens einen dichroitischen Strahlteiler oder Strahlvereiniger umfaßt.

## Claims

1. A Device, which comprises a laser, a confocal laser scanning microscope, a flexible optical fiber element (4) for feeding the light beam from the laser (1) into the confocal laser scanning microscope (2) wherein between the laser (1) and the optical fiber element (4) a scanning shutter is provided, by which the optical fiber element (4) can be uncovered for the light beam of the laser (1) only during scanning, that is to say for the purpose of recording images, means are provided for automatically synchronizing the scanning shutter and the scanning process, the scanning shutter (5) is formed by electrooptical and/or magnetooptical modulation means by which the light beam of the laser (1) can be deflected, the laser (1) is a UV-laser, the optical fiber element (4) is a single mode fiber, the flexible optical fiber element (4) is arranged between the UV laser (1) and the adjusting device ( 3), and with the adjusting device (3) the light beam of the UV-laser is aligned the beam path of the scanning laser microscope (2).

2. Device according to Claim 1, **characterized in that** at least one filter is arranged between the UV-laser and the scanning shutter, or between the scanning shutter and the optical fiber element.

3. Device according to one of Claims 1 to 2, **characterized in that** a plurality of exchangeable filters, preferably a filter wheel, for selecting specific wavelength ranges are arranged between the UV-laser and the scanning shutter, or between the scanning shutter and the optical fiber element.

4. Device according to one of Claims 1 to 3, **characterized in that** a light input coupler (6) is arranged at one end of the optical fiber element (4) and, correspondingly, an light output coupler (7) is arranged at the other end of the optical fiber element (4).

5. Device according to one of Claims 1 to 4, **characterized in that** arranged between the optical fiber element (4) and the adjusting device (3) is at least one optical module (8) via which visible light can be guided with a defined beam path from the optical fiber element (4) onto the adjusting device (3).

6. Device according to Claim 6, **characterized in that** the optical module (8) renders the visible light emerging from the optical fiber element (4) parallel.

7. Device according to one of Claims 5 or 6, **characterized in that** the optical module (8) comprises a pinhole diaphragm optical system with a lens (10, 11) or a lens system.

8. Device according to one of Claims 5 to 7, **characterized in that** the optical module ( 8 ) can be removed after the visible light emerging from the optical fiber element (4) has been aligned with the beam path of the scanning laser microscope (2).

9. Device according to one of Claims 1 to 8, **characterized in that** the adjusting device comprises at least one adjustable lens.

10. Device according to one of Claims 1 to 9, **characterized in that** the adjusting device (3) comprises at least one dichroitic beam splitter or beam combiner.

## Revendications

1. Système qui comprend un laser, un microscope confocal à balayage laser, un élément à fibres optiques (4) flexible et un dispositif pour injecter le faisceau lumineux du laser (1) dans le microscope confocal à balayage laser (2), un obturateur de balayage (5) étant disposé entre le laser (1) et l'élément à fibres optiques (4), par lequel l'élément à fibres optiques (4) ne peut être libéré pour le faisceau lumineux du laser (1) que pendant le balayage, donc que pour la prise d'images, des moyens étant prévus pour la synchronisation automatique de l'obturateur de balayage et du processus de balayage, l'obturateur de balayage (5) étant formé par des moyens de modulation électro-optiques et/ou magnéto-optiques par lesquels le faisceau lumineux du laser UV (1) peut être dévié, le laser est un laser UV, l'élément à fibres optiques (4) est une fibre optique monomode, l'élément à fibres optiques (4) flexible est disposé entre le laser UV (1) et un dispositif d'ajustage (3) et le faisceau lumineux du laser UV pouvant être aligné avec la marche des rayons du microscope confocal à balayage laser (2) au moyen du dispositif d'ajustage (3).

2. Système selon la revendication 1,
**caractérisé en ce qu'**au moins un filtre est disposé entre le laser UV et le diaphragme de balayage ou entre le diaphragme de balayage et l'élément à fibres optiques.

3. Système selon l'une des revendications 1 et 2,
**caractérisé en ce que** plusieurs filtres interchangeables, en particulier une roue de filtres, sont disposés entre le laser UV et le diaphragme de balayage ou entre le diaphragme de balayage et l'élément à fibres optiques pour sélectionner des domaines déterminés de longueurs d'onde.

4. Système selon l'une des revendications 1 à 3,
**caractérisé en ce qu'**un injecteur de lumière (6) est disposé à une extrémité de l'élément à fibres optiques (4) et, en correspondance, un déclencheur de lumière (7) est disposé à l'autre extrémité de l'élément à fibres optiques (4).

5. Système selon l'une des revendications 1 à 4,
**caractérisé en ce qu'**au moins un composant optique (8), par lequel de la lumière visible à marche des rayons définie peut être guidée hors de l'élément à fibres optiques (4) sur le dispositif d'ajustage (3), est disposé entre l'élément à fibres optiques (4) et le dispositif d'ajustage (3).

6. Système selon la revendication 5,
**caractérisé en ce que** le composant optique (8) rend parallèle la lumière visible sortant de l'élément à fibres optiques (4).

7. Système selon l'une des revendications 5 et 6,
**caractérisé en ce que** le composant optique (8) comprend une optique a sténopés avec une lentille (10, 11) ou un système de lentilles.

8. Système selon l'une des revendications 5 à 7,
**caractérisé en ce que** le composant optique (8) peut être écarté après l'alignement de la lumière visible sortant de l'élément à fibres optiques (4) sur la marche des rayons du microscope à balayage laser (2).

9. Système selon l'une des revendications 1 à 8,
**caractérisé en ce que** le dispositif d'ajustage comprend au moins une lentille réglable.

10. Système selon l'une des revendications 1 à 9,
**caractérisé en ce que** le dispositif d'ajustage (3) comprend au moins une lame séparatrice ou un dispositif de convergence dichroïque.
